# EUROPEAN PATENT APPLICATION

(11) **EP 3 800 025 A1**
(43) Date of publication of application: **07.04.2021**
(21) Application number: 20190139.4
(22) Date of filing: 07.08.2020
(51) Int. Cl.: B29C 33/68, B29C 33/46, B29C 33/18, B29C 33/00, B29C 44/14

(54) **A METHOD FOR MOLDING A PRODUCT COMPRISING A SUBSTRATE LAYER AND A FOAM LAYER AND VEHICLE INTERIOR**

(30) Priority: 18.09.2019 CN 201910883072
(71) Applicant: Faurecia (China) Holding Co., Ltd., Shanghai 201109 (CN)
(72) Inventor: HU, Yong, SHANGHAI, 201109 (CN); SHANG, Hao, SHANGHAI, 201109 (CN); RUAN, Xinyi, SHANGHAI, 201109 (CN); CHEN, Zhengtao, SHANGHAI, 201109 (CN); JIN, Jiandui, SHANGHAI, 201109 (CN)
(74) Representative: Plasseraud IP

(57) **Abstract**

The present invention relates to a method for molding a product comprising a substrate layer and a foam layer. The method comprises at least the following steps: a step for adsorbing a substrate layer, a step for adsorbing an intermediate partition medium, a step for mold closing and injection, and a step for demolding and product taking-out, wherein the product comprises the substrate layer and the foam layer is taken out after demolding, and the intermediate partition medium is removed, wherein the intermediate partition medium is made of a polypropylene or polyethylene material. The method of the present invention can guarantee the quality of the product and reduce the material requirements of the intermediate partition medium and the technological requirements of the foaming process, and effectively reduce the cost of the process and reduce the weight of the product. The present invention further relates to a vehicle interior comprising the product made by the above method.

## Description

### Technical Field

The present invention relates to the technical field of a method for molding a product comprising a substrate layer and a foam layer, and in particular, of vehicle interior.

### Background Art

The focus of car buyers on cars has gradually shifted from maneuverability and safety to the aesthetic of an interior, not only paying attention to the visual appearance of a single interior element, but also paying more attention to coordination among the touch, shape, and color of the interior.

For this purpose, major automobile enterprises have developed vehicle interiors decorated with natural materials, where it is the most difficult to process vehicle interiors decorated with genuine leather, and a series of problems usually occur especially when leather and plastic components are processed by using a lamination process. In order to combine an injection material and a skin layer (for example, leather) quickly and conveniently, in the prior art, the skin layer is put inside a mold directly and then foamed in the mold, so that a foam layer is molded directly on the skin layer. However, the process usually leads to the problems that a high rejection rate occur, such as, problems that a foamed plastics material leaks from the joint of the skin layer, an orange peel effect is produced at the joint, and the joint is unable to be aligned relative to the lower surface of the injection material. Moreover, the sizes of different parts of a multi-layer molded body are unstable in different weather conditions. Therefore, there are lots of problems.

In addition, the in-mold foaming process has a plurality of process steps, which requires plenty of work stations and belongs to a highly labor-intensive process. Moreover, before foaming in the mold, the joint of the skin layer needs to be fully sealed, so as to avoid the case that the foamed plastics leak from the joint when the foaming mold is pressurized. If the joint cannot be fully sealed before foaming in the mold, the skin layer may be damaged, or the touch or appearance of the skin layer may be affected. However, in fact, it is hard for the prior art to ensure that such problems do not occur.

In order to fully seal the joint, a method for inserting a slush-molding skin layer into the foaming mold before the foaming process also appears in the prior art, where a skin layer wraps the surface of the slush-molding skin layer and is combined with the surface, then the foaming process is implemented, and the slush-molding skin layer and the skin layer are combined to form a composite coating after the foaming process. Though the prior art is capable of resolving the problem at the joint between the skin layer and the foam layer, the slush-molding skin layer has higher requirements on the granularity, thermal stability, and melting property of the material. In addition, the slush-molding skin layer also requires that the foaming mold can heat up and cool fast, which leads to high energy consumption in the whole foaming process. Therefore, the technological cost of the technical solution is excessively high. In addition, because the composite coating is formed by a combination of the skin layer and the slush-molding skin layer, the weight of the product molded is relatively large.

### Disclosure of the Invention

It should be noted that, an objective of the present invention is to overcome one or more shortcomings found in the background art, that is, to provide a method to replace the use of a slush-molding skin layer in the prior art, thereby resolving the problem at the joint between a skin layer and a foam layer, reducing the material requirements of an intermediate partition medium and the technological requirements of the foaming process based on the realization of the objective, effectively reducing the technological cost, and reducing the weight of a product formed after foam molding.

For this purpose, the present invention provides a method for molding a product comprising a substrate layer and a foam layer, wherein the method comprises at least the following steps:
a step for adsorbing a substrate layer, wherein a first upper mold and a substrate layer are provided, and the substrate layer is adsorbed to the first upper mold by vacuum;
a step for adsorbing an intermediate partition medium, wherein a first lower mold and an intermediate partition medium are provided, the intermediate partition medium is laid on the first lower mold, and the intermediate partition medium is adsorbed to the profile of the first lower mold by vacuum so that the intermediate partition medium fully fits the profile of the first lower mold;
a step for mold closing and injection, wherein the first upper mold and the first lower mold are closed against each other, and foam molding is performed by an injection device to form a foam layer between the substrate layer and the intermediate partition medium; and
a step for demolding and product taking-out, wherein a product comprises the substrate layer and the foam layer is taken out after demolding, and the intermediate partition medium is removed,
wherein, the intermediate partition medium is made of a polypropylene or polyethylene material.

According to the method of the present invention, before a conventional foam molding process is implemented, the molded intermediate partition medium is introduced, then the intermediate partition medium fully fits the profile of the first lower mold by vacuum, and the foam molding process is implemented subsequently. After the foam layer is molded, the intermediate partition medium is removed, so as to produce the product comprising the substrate layer and the foam layer with low costs and high quality.

Moreover, the intermediate partition medium is made of a polypropylene or polyethylene material. The polypropylene material has high mechanical strength, excellent heat resistance and chemical resistance, and a lower density, while the polyethylene material has better chemical stability, and excellent low temperature resistance and electrical insulation, and is insoluble in general solutions at a normal temperature. According to the method of the present invention, the intermediate partition medium made of the two materials is capable of replacing a slush-molding skin layer, thereby resolving the problem at the joint between the skin layer and the foam layer, effectively reducing the material property requirements and the technological requirements of the foaming process, reducing the cost of the process, and reducing the weight of the product.

In different embodiments of the method according to the present invention, we can depend on one and/or more following configurations in a single or combination way:
In an embodiment, the method further comprises a step for molding the intermediate partition medium before the step for adsorbing an intermediate partition medium, wherein a second male mold is provided, an intermediate partition medium to be molded is fixed over the second male mold, the intermediate partition medium to be molded is heated and then formed into a bubble structure by bubbling, then the position of the second male mold is adjusted so that the second male mold moves into the bubble structure, and then the bubble structure is adsorbed to the profile of the second male mold by vacuum to mold the intermediate partition medium. A pre-molded intermediate partition medium helps the intermediate partition medium fit the profile of the first lower mold more easily and perfectly in the step for adsorbing an intermediate partition medium.

In an embodiment, the method further comprises a step for preheating the intermediate partition medium, between the step for molding the intermediate partition medium and the step for adsorbing an intermediate partition medium, wherein the intermediate partition medium is preheated. The intermediate partition medium after being heated has better malleability.

In an embodiment, the step for adsorbing an intermediate partition medium is carried out by vacuum holes arranged at R angles of the first lower mold, so that the intermediate partition medium better fits the profile of the R angles of the first lower mold.

In an embodiment, the step for adsorbing an intermediate partition medium comprises segmentally performing a vacuum operation for adsorbing the intermediate partition medium onto the first lower mold. Preferably, the vacuum operation is firstly performed on the part to be vacuumed with a large area, and then the vacuum operation is performed on the details of the profile of the surface of the first lower mold.

In an embodiment, the step for adsorbing an intermediate partition medium comprises a sub-step for applying a line vacuum or a point vacuum to different regions of the first lower mold. Preferably, the line vacuum is used in a plane boundary with the simple structure, and the line vacuum is capable of adsorbing the intermediate partition medium into a modeling with a large area in an even and easy way, while the point vacuum is used in a corner or a boundary with the modeling having a large fluctuation, and the point vacuum is capable of realizing a fast modeling.

In an embodiment, the step for adsorbing an intermediate partition medium comprises a sub-step for adjusting different vacuum strengths for different regions of the first lower mold. In this way, the vacuum can use and avoid different modelings.

In an embodiment, the method further comprises a detecting step for detecting operations of vacuum pumps by vacuum gauges on the vacuum pumps with which the first upper mold and the first lower mold are equipped. In this way, whether an air leak occurs can be detected at any time.

In an embodiment, the method further comprises a blowing step for blowing the product to facilitate demolding when it is found to be difficult to demold during the step for demolding and product taking-out.

In an embodiment, the method further comprises an adhesion step, wherein a skin layer is wrapped on the surface of the foam layer after the intermediate partition medium is removed, and the substrate layer, the foam layer and the skin layer are stuck together. In this way, no foam leaks from the joint between the foam layer and the skin layer, thereby avoiding the foregoing series of common problems such as an untight joint and improving the stability of the product.

Based on the above, the method according to the present invention is capable of effectively resolving many problems that may exist in the prior art of foam molding, such as an untight joint and an orange peel effect at the joint, thereby improving the stability of the foam molding process, and reducing the technological cost, and reducing the weight of the product based on the realization of the objective of the present invention.

Another aspect of the present invention further relates to a vehicle interior, comprising the product made by the method according to any one of the foregoing embodiments.

### Brief Description of the Drawings

It should be understood that, in the present invention, except obviously contradictory cases or incompatible cases, all features, variant ways and/or specific embodiments may be combined according to a plurality of combinations.

By reading the following specific embodiments as non-limiting descriptions with reference to the accompanying drawings, other features and advantages of the present invention will be apparent. In the drawings:
FIG. 1 is a flowchart of a method for molding a product comprising a substrate layer and a foam layer according to the present invention;
FIG. 2 is a schematic diagram of a second male mold used in a step for molding the intermediate partition medium according to the method in FIG. 1;
FIG. 3 is a schematic diagram of a second male mold and an intermediate partition medium to be molded that are used in a step for molding the intermediate partition medium according to the method in FIG. 1;
FIG. 4 is a schematic diagram of the intermediate partition medium to be molded according to FIG. 3 that is fixed by a clamping frame;
FIG. 5 is a schematic diagram of the intermediate partition medium to be molded according to FIG. 4 that is preheated by a heating plate;
FIG. 6 is a schematic diagram of the intermediate partition medium to be molded according to FIG. 5 that is blown into a bubble structure;
FIG. 7 is a schematic diagram of the second male mold according to FIG. 6 moving into the bubble structure;
FIG. 8 is a schematic diagram of the intermediate partition medium to be molded according to FIG. 7 that is vacuumized and fits the profile of the second male mold; and
FIG. 9 is a schematic diagram of the intermediate partition medium according to FIG. 8 that is punched.

### Description of Embodiments

It should be understood that, the foregoing accompanying drawings are not in a substantial proportion, but merely simple drawings used to describe a plurality of preferred features of the basic principles of the present invention. Design features disclosed in the present invention, such as a dimension, a direction, a location, and a shape, are determined by specific applications and using environments.

The present invention is described in detail with reference to embodiments and the accompanying drawings. In the accompanying drawings, the same reference number refers to the same or equivalent elements of the present invention in all the accompanying drawings.

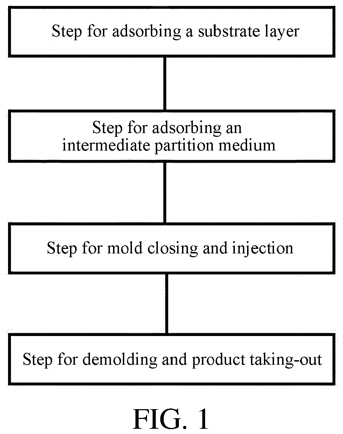

FIG. 1 is a flowchart of a method for molding a product comprising a substrate layer and a foam layer, at least comprising a step for adsorbing a substrate layer, a step for adsorbing an intermediate partition medium, a step for mold closing and injection, and a step for demolding and product taking-out. The following describes each step of the method according to the present invention in detail.

The step for adsorbing a substrate layer comprises: providing a first upper mold and a substrate layer, and adsorbing the substrate layer to the first upper mold by vacuum.

Specifically, the material of the substrate layer is an injection material used for foam molding and capable of being stuck to the foam layer.

The step for adsorbing an intermediate partition medium comprises: laying an intermediate partition medium on a first lower mold, and adsorbing the intermediate partition medium to the profile of the first lower mold by vacuum so that the intermediate partition medium fully fits the profile of the first lower mold.

To enable the intermediate partition medium to fully fit the first lower mold, the step for adsorbing an intermediate partition medium is preferably carried out by vacuum holes arranged at R angles of the first lower mold.

When a mold starts with a vacuum, the intermediate partition medium can be adsorbed to fit the whole profile of the first lower mold by the vacuum holes in the space automatically. To ensure the stability of the process, the vacuum holes need to be arranged at all the R angles of the first lower mold. The size of the vacuum holes is designed in a manner that the vacuum holes will not cause the deformation of a surface of the first lower mold, and the intermediate partition medium can be perfectly adsorbed to fit the profile and modeling of the first lower mold.

Moreover, the step for adsorbing an intermediate partition medium may comprise segmentally performing a vacuum operation for adsorbing the intermediate partition medium onto the first lower mold.

Moreover, to enable the intermediate partition medium to fully fit the first lower mold, the vacuum operation needs to be segmentally performed. Preferably, the vacuum operation is firstly performed on a part with a large area of the surface of the first lower mold, and then the vacuum operation is performed on the details of the profile of the surface of the first lower mold. The following describes a function of a vacuum structure in detail.

The vacuum of the mold needs to be designed according to the modeling of a product required. All pipelines of the vacuum need to be integrated on a main vacuum interface for convenient connection with the outside, and the whole inside of the mold is a space without any ventilation.

The step for adsorbing an intermediate partition medium comprises a sub-step for applying a line vacuum or a point vacuum to different regions of the first lower mold. The vacuum function may be started in 1 to 3 steps according to an actual structure, so as to make it convenient for an operator to design and drive, by the function, the intermediate partition medium to extend to a position in which it is difficult to mold the intermediate partition medium.

In terms of the design of a vacuum modeling, a line vacuum may be used in a simple plane boundary, and the line vacuum is capable of adsorbing the intermediate partition medium onto the first lower mold in an even and easy way and then molding the intermediate partition medium.

A point vacuum may be used in a corner or a boundary with the modeling having a large fluctuation, and the point vacuum is capable of realizing a fast molding for a modeling.

Positions of the vacuum are usually disposed at a boundary of the modeling. The adsorbing effect of these positions has a direct influence on the molding of the following process. For an approximately upside-down mechanism, whether to increase the size of a vacuum mechanism needs to be considered, a vacuum density of the positions is increased on condition that the modeling is not affected, and the vacuum hole (line) is also considered to be arranged on the position of the plane.

Moreover, the actual distance between the first lower mold and the intermediate partition medium may be positively correlated to a vacuum start sequence. The first lower mold is designed in a manner that a vacuum position is near to the intermediate partition medium as much as possible, so as to conveniently release the vacuum function, but no interference is caused to the modeling of the first upper mold and the disposition of the first lower mold.

Advantageously, in addition to the inside vacuum, a vacuum on the edge may also be designed, and its position may be arranged on two sides above the first lower mold, so as to form a closed vacuum circle. This vacuum function usually needs to start first, so as to ensure that when the vacuum starts inside, an air leak will not be caused due to the overfilling of the inside area.

The vacuum function needs to be capable of starting vacuum strengths with the same force at different locations on the premise that the profile shape of the first lower mold is calculated. The vacuum strength is not reduced suddenly due to the start of a certain vacuum. On the premise that there is no air leak, the constancy and sustainability of the sizes of vacuums from parts to a whole need to be ensured, and the operation side of the mold needs to be provided with directly operable buttons for all the functions.

As a variant, the step for adsorbing an intermediate partition medium comprises a sub-step for adjusting different vacuum strengths for different regions of the first lower mold. The vacuum function needs to be capable of distinguishing, in each operation for starting the vacuum, a subdivided start manner of vacuums with different strengths, so as to help the vacuum adapt to a local profile.

The following describes the phase of the step for mold closing and injection in the method of the present invention.

The step for mold closing and injection comprises: closing the first upper mold and the first lower mold against each other, and performing foam molding by an injection device to form a foam layer between the substrate layer and the intermediate partition medium.

A sharp surface shall be avoided being used as a contact surface of the injection device as much as possible, avoiding the case that the intermediate partition medium is damaged, and the contact surface is preferably designed into a cylinder.

The step for demolding and product taking-out comprises: taking out a product comprising the substrate layer and the foam layer after demolding, and removing the intermediate partition medium. Preferably, the intermediate partition medium is recycled for at least three times.

As described above, the intermediate partition medium is made of a polypropylene or polyethylene material. The polypropylene material has high mechanical strength, excellent heat resistance and chemical resistance, and a lower density, while the polyethylene material has better chemical stability, and excellent low temperature resistance and electrical insulation, and is insoluble in general solutions at a normal temperature. According to the method of the present invention, the intermediate partition medium made of the two materials is capable of replacing a slush-molding skin layer, thereby resolving the problem at the joint between the skin layer and the foam layer, effectively reducing the material property requirements and the technological requirements of the foaming process, reducing the cost of the process, and reducing the weight of the product.

Moreover, the method further comprises a step for blowing the product to facilitate demolding when it is found to be difficult to demold during the step for demolding and product taking-out. In some cases, though the vacuum function stops when foaming and casting end, negative pressure is still generated under a quite good vacuum, which leads to a phenomenon that it is difficult to take out a molded product. In this case, the negative pressure can be released instantaneously by a blowing device disposed in a vacuum cavity, thereby ensuring the appearance of the product.

Finally, an adhesion step is further comprised, wherei the adhesion step comprises: wrapping a skin layer on the surface of the foam layer after the intermediate partition medium is removed, and sticking the substrate layer, the foam layer and the skin layer together.

During this period, the skin layer, such as leather stuck to the foam layer and the substrate layer, is used according to the method of the present invention rather than directly foamed inside the mold, thereby avoiding a series of common problems such as an untight joint and an orange peel effect at the joint mentioned in the background art, and improving the stability of the foam molding process. In addition, due to the removal of the intermediate partition medium, the product molded according to the method of the present invention has the advantage of being lighter in weight compared with the technical solution mentioned in the background art.

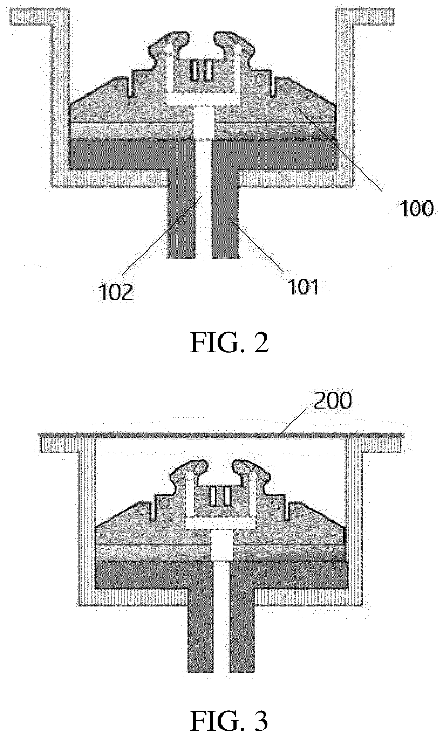

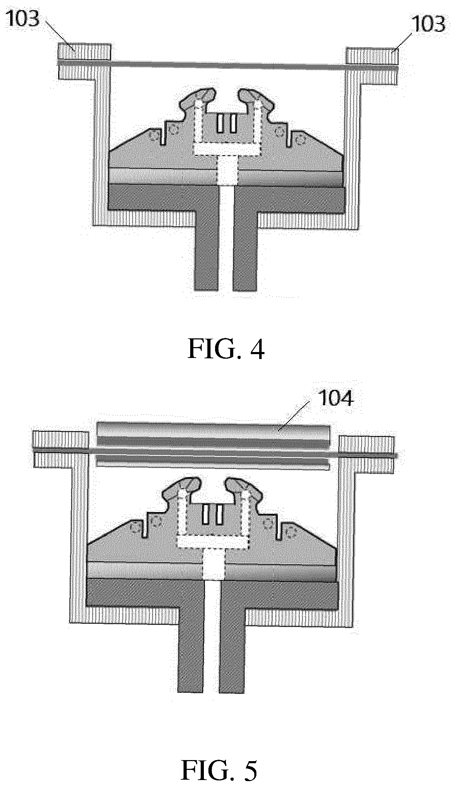

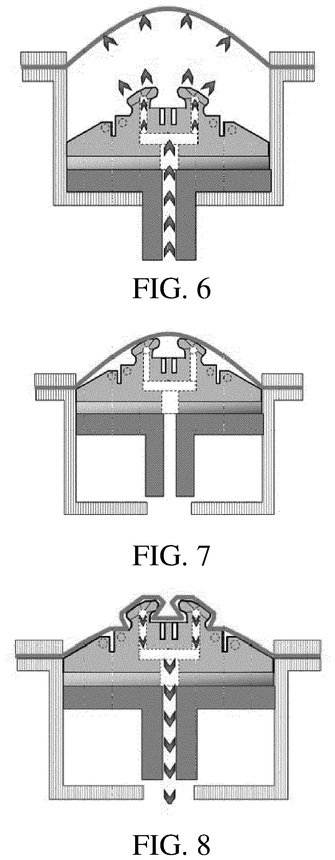

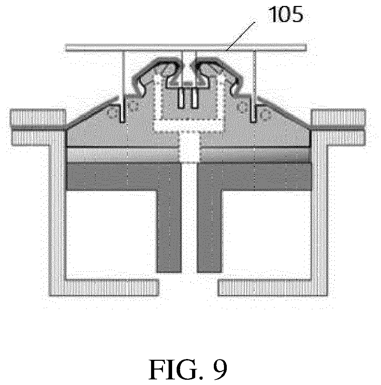

In addition, in order to make it easier to fully fit the intermediate partition medium with the profile of the first lower mold, a step for molding the intermediate partition medium may be further comprised before the step for adsorbing an intermediate partition medium. The following describes the operations of the step for molding the intermediate partition medium in detail in sequence, referring to FIG. 2 to FIG. 9.
Step 1, provide a second male mold 100 complementary to the structure of the first lower mold, where the second male mold 100 is carried by a driving device 101 and capable of ascending and descending in a vertical direction, the driving device 101 has an air circulation channel 102 interconnected to a vacuum hole of the second male mold 100, and the vacuum hole can be blown or vacuumized by the air circulation channel 102. An intermediate partition medium 200 to be molded is fixed over the second male mold 100 by a clamping frame 103 located on the edge of a mold.
Step 2, preheat upper and lower surfaces of the intermediate partition medium 200 to be molded by using a heating plate 104, so as to enhance its malleability and enable it to be more easily adsorbed to the profile of the second male mold 100 by vacuum.
Step 3, blow the intermediate partition medium 200 to be molded by the air circulation channel 102 and the vacuum hole, enabling the intermediate partition medium 200 to be molded to bend upward to form a bubble structure.
Step 4, drive the second male mold 100 to move upward by the driving device 101 until the profile of the second male mold 100 is partially in contact with the intermediate partition medium 200 to be molded.
Step 5, vacuumize the space between the intermediate partition medium 200 to be molded and the profile of the second male mold 100 by the air circulation channel 102 and the vacuum hole, and adsorb the intermediate partition medium 200 to be molded to the profile of the second male mold 100, enabling the intermediate partition medium 200 to be molded to fully fit the second male mold 100 and to be molded.
Step 6, punch the intermediate partition medium by using a punching device 105, separate the intermediate partition medium, and remove an unnecessary part.

In the end, demolding is performed, to obtain an intermediate partition medium molded.

Moreover, in order to be suitable for implementing vacuum adsorption, a step for preheating the intermediate partition medium between the step for molding the intermediate partition medium and the step for adsorbing an intermediate partition medium may be further comprised, during which the intermediate partition medium is preheated.

Preheating the intermediate partition medium before putting it into the mold will have a better effect on the final malleability. When the intermediate partition medium preheated is put into the mold, the intermediate partition medium is not flat, but has a sinking part caused by its own gravity. The sinking part extends the modeling of the intermediate partition medium quite well, and plays a good role in the molding of the profile itself.

It should be noted that, usually the sinking caused by the gravity is concentrated in the center of gravity (central part) of the intermediate partition medium, so that after the vacuum operation is finished, the intermediate partition medium at edge positions that are not close to the center of gravity will receive the greatest tensile action, and the intermediate partition medium is likely to be thinner in these positions.

The step for preheating the intermediate partition medium may be implemented in a preheating oven.

Moreover, the method further comprises a detecting step for detecting operations of vacuum pumps by vacuum gauges on the vacuum pumps with which the first upper mold and the first lower mold are equipped.

The vacuum pump equipped in the mold is connected to the vacuum gauge. The vacuum pump is continuously stable and the output is kept at a fixed value. After a vacuum step is finished, whether there is a vacuum leak and whether the requirement for a vacuum condition needed is met can be checked by the vacuum gauge connected. The vacuum degree can be checked for each step of the vacuum operation by connecting the vacuum gauge according to requirements.

Moreover, the method may further comprise a check step. A check is needed for the surfaces of the mold and the intermediate partition medium to make sure there is no impurity before the foaming process is performed each time. If the impurity is not removed, the modeling of the final product will be affected directly, and the vacuum structure of the mold is easily to be blocked.

In order to avoid the case that the vacuum structure of the mold is blocked, and in consideration of daily maintenance, usually the vacuum hole (line) is connected to the vacuum cavity directly. In terms of daily maintenance, if the vacuum cavity is blocked due to dust or impurities, a plastic product (not metal) less than a distance between the vacuum holes can be used to dredge the vacuum hole and remove the blockage to the vacuum cavity. Therefore, the distance between the vacuum hole and the vacuum cavity is designed as a straight line. The vacuum cavity inside the mold is guided to a main vacuum valve in need of a larger vacuum hole. In an embodiment in which the vacuum operation needs to be segmentally performed, all vacuum cavities need to be separated when the vacuum is segmented.

Finally, it is stated again that, because the intermediate partition medium is absorbed by vacuum of the first lower mold, the space between the intermediate partition medium and the profile of the first lower mold should be sealed to prevent an air leak. In this respect, the intermediate partition medium needs to be impermeable, is usually approximately 1 millimeter in thickness and has excellent elongation. Different thicknesses may be used in different embodiments, and the thickness of the intermediate partition medium is fully consistent with its material and malleability.

The embodiments above are merely used as examples, and are not intended to limit the present invention. On this basis, the person skilled in the art can anticipate other embodiments that can achieve the same functions within the protection scope of the claims of the present invention.

The person skilled in the art masters a plurality of embodiments, variants, and improvements. In particular, it should be clear that, except obviously contradictory cases or incompatible cases, all features, variant ways and/or specific embodiments may be combined with each other. All these embodiments, variants and improvements fall within the protection scope of the present invention.

## Claims

1. A method for molding a product comprising a substrate layer and a foam layer, wherein the method comprises at least the following steps:
a step for adsorbing a substrate layer, wherein a first upper mold and a substrate layer are provided, and the substrate layer is adsorbed to the first upper mold by vacuum;
a step for adsorbing an intermediate partition medium, wherein a first lower mold and an intermediate partition medium are provided, the intermediate partition medium is laid on the first lower mold, and the intermediate partition medium is adsorbed to the profile of the first lower mold by vacuum so that the intermediate partition medium fully fits the profile of the first lower mold;
a step for mold closing and injection, wherein the first upper mold and the first lower mold are closed against each other, and foam molding is performed by an injection device to form a foam layer between the substrate layer and the intermediate partition medium; and
a step for demolding and product taking-out, wherein a product comprises the substrate layer and the foam layer is taken out after demolding, and the intermediate partition medium is removed,
wherein, the intermediate partition medium is made of a polypropylene or polyethylene material.

2. The method according to claim 1, wherein the method further comprises a step for molding the intermediate partition medium before the step for adsorbing an intermediate partition medium, wherein a second male mold is provided, an intermediate partition medium to be molded is fixed over the second male mold, the intermediate partition medium to be molded is heated and then formed into a bubble structure by bubbling, then the position of the second male mold is adjusted so that the second male mold moves into the bubble structure, and then the bubble structure is adsorbed to the profile of the second male mold by vacuum to mold the intermediate partition medium.

3. The method according to claim 2, wherein the method further comprises a step for preheating the intermediate partition medium, between the step for molding the intermediate partition medium and the step for adsorbing an intermediate partition medium, wherein the intermediate partition medium is preheated.

4. The method according to claim 1, wherein the step for adsorbing an intermediate partition medium is carried out by vacuum holes arranged at R angles of the first lower mold.

5. The method according to claim 4, wherein the step for adsorbing an intermediate partition medium comprises segmentally performing a vacuum operation for adsorbing the intermediate partition medium onto the first lower mold.

6. The method according to claim 5, wherein the step for adsorbing an intermediate partition medium comprises a sub-step for applying a line vacuum or a point vacuum to different regions of the first lower mold.

7. The method according to claim 5, wherein the step for adsorbing an intermediate partition medium comprises a sub-step for adjusting different vacuum strengths for different regions of the first lower mold.

8. The method according to claim 1, wherein the method further comprises a detecting step for detecting operations of vacuum pumps by vacuum gauges on the vacuum pumps with which the first upper mold and the first lower mold are equipped.

9. The method according to claim 1, wherein the method further comprises a blowing step for blowing the product to facilitate demolding when it is found to be difficult to demold during the step for demolding and product taking-out.

10. The method according to any one of claims 1 to 9, wherein the method further comprises an adhesion step, wherein a skin layer is wrapped on the surface of the foam layer after the intermediate partition medium is removed, and the substrate layer, the foam layer and the skin layer are stuck together.

11. A vehicle interior, comprising the product made by the method according to any one of claims 1 to 10.
